(19) Europäisches Patentamt
European Patent Office
Office européen des brevets

(11) **EP 4 756 674 A1**

(12) **EUROPEAN PATENT APPLICATION**

(43) Date of publication:
**10.06.2026 Bulletin 2026/24**

(21) Application number: **24383315.9**

(22) Date of filing: **04.12.2024**

(51) International Patent Classification (IPC):
**G06N 3/045** (2023.01)   **G06N 3/088** (2023.01)
**G06N 3/091** (2023.01)   **G06F 21/57** (2013.01)

(52) Cooperative Patent Classification (CPC):
**G06N 3/045; G06N 3/088; G06N 3/091;**
G06F 21/577

| (84) Designated Contracting States:<br>**AL AT BE BG CH CY CZ DE DK EE ES FI FR GB GR HR HU IE IS IT LI LT LU LV MC ME MK MT NL NO PL PT RO RS SE SI SK SM TR**<br>Designated Extension States:<br>**BA**<br>Designated Validation States:<br>**GE KH MA MD TN**<br><br>(71) Applicant: **MLCode Software S.L.**<br>**08029 Barcelona (ES)** | (72) Inventors:<br>• **Raventós Simón, Joan**<br>  **Barcelona (ES)**<br>• **Zapater Cano, Sergi**<br>  **Barcelona (ES)**<br><br>(74) Representative: **Grünecker Patent- und**<br>**Rechtsanwälte**<br>**PartG mbB**<br>**Leopoldstraße 4**<br>**80802 München (DE)** |

(54) **METHODS, SYSTEMS, AND COMPUTER-READABLE MEDIA FOR ASSESSING OUTPUT OF MACHINE LEARNING SYSTEMS**

(57)     A method for assessing output of machine learning systems is disclosed. The method comprises receiving an input to be provided to a machine learning system, and receiving a corresponding output from the machine learning system. For the input-output pair, a first score is determined based on previous input-output pairs. Determining the first score comprises grouping the input-output pair and previous input-output pairs into a cluster based on a first similarity measure, and determining one or more sub-clusters based on a second similarity measure. The method also comprises determining a second score for the output based on probabilities employed internally by the machine learning system. Based on the first score and the second score, a composite score for the input-output pair is determined. When the composite score is below a threshold, a warning is displayed at a user interface.

FIG. 1

## Description

### Technical Field

The present disclosure proposes solutions for assessing output of machine learning systems. In particular, the present disclosure relates to a user interface displaying a composite score for output generated by a machine learning system in response to an input provided by a user.

### Background

In recent years, advances in artificial intelligence have led to adoption of machine learning tools in many branches of society. Recent machine learning systems provide for unprecedented quality in information processing and output generation. However, it has become well known that machine learning systems are prone to diverse serious flaws, for example, hallucinations. Such problems, often due to due to lack of contextual knowledge or contradictory user inputs, make deployment of machine learning systems too risky to contemplate for critical areas such as code production or technical maintenance.

### Summary

The present disclosure addresses security problems entailed by use of machine learning systems. A computer-implemented method for assessing output of machine learning systems is disclosed. The method comprises receiving, via a user interface, an input to be provided to a machine learning system, and receiving, from the machine learning system, an output in response to the input. The input and the output form an input-output pair, for which a first score is determined based on a set of previous input-output pairs. Determining the first score comprises grouping the input-output pair and one or more previous input-output pairs of the set of previous input-output pairs into a cluster based on a first similarity measure between the input and previous inputs of the previous input-output pairs. The method further comprises determining one or more sub-clusters of the cluster based on a second similarity measure between the output and previous outputs of the one or more previous input-output pairs grouped into the cluster. The method also comprises determining a second score for the output, wherein the second score is based on probabilities employed internally by the machine learning system for generating the output. Based on the first score and the second score, a composite score for the input-output pair is determined. The method further comprises, when the composite score is below a threshold, displaying, at the user interface, a warning that the output is unreliable.

This disclosure hence provides for a user interface showing a score for output generated by a machine learning system, so that the user is warned if the output is deemed unreliable. The displayed information hence allows the user to make an informed decision on whether to trust the generated output. The user interface hence guides the user to best use the machine learning system by means of a continued human-machine interaction process. In particular, when the composite score is low, the displayed warning prompts the user to reformulate the user input, so that the machine learning system can provide improved output.

In addition, the disclosed approach allows comparing reliability between different machine learning systems, e.g. after a version change. The disclosed solution hence provides and deepens insight in the internal functioning of machine learning systems.

According to an embodiment, the user interface is a user interface of a development environment, and the input comprises an instruction to generate code. According to other embodiments, the user interface is a user interface for supporting a user with controlling a technical system, a user interface for clinical support providing diagnostic assistance and medical treatment recommendation, a user interface for legal document analysis and drafting, a user interface for financial research and analysis, or a user interface for regulatory monitoring and fraud detection.

According to a further embodiment, the method also comprises adding the input-output pair to the set of previous input-output pairs. According to aspects, the set of previous input-output pairs comprises instructions to autocomplete code in different programming languages to assess that the machine learning system generates autocompleted code without vulnerabilities. According to other aspects, the set of previous input-output pairs comprises instructions to generate code to assess that the machine learning system generates secure and accurate code, or comprises instructions to generate code for execution inside an interpreter to assess resistance of the machine learning system to attacks involving interpreter abuse. According to a further aspect, the set of previous input-output pairs are selected to assess resistance of the machine learning system to prompt injection attacks.

According to an embodiment, each input-output pair of the set of previous input-output pairs contains a previous input and a corresponding previous output generated by the machine learning system in response to the previous input. According to another embodiment, the machine learning system is a first machine learning system, and each input-output pair of the set of previous input-output pairs contains a previous input and a corresponding previous output generated by a second machine learning system in response to the previous input.

According to embodiments, the method may further comprise generating a third score for the output based on calculating mutual information between the input and the output. In these embodiments, determining the composite score is further based on the third score. According to further embodiments, the method also comprises determining a fourth score based on comparing the output to sources retrieved by the machine learning system for generating the output. In these embodiments, determining the composite score is further based on the fourth score.

According to other aspects, determining a composite score based on the first score and the second score comprises combining the first score and the second score using weights. The weights for combining the first score and the second score, and potentially, also the third and/or fourth scores, may be generated by a trained weighting model.

According to another embodiment, the first similarity measure is based on a Hamming distance, and the second similarity measure is based on a trained natural language model configured for assessing entailment. According to yet other embodiments, the one or more sub-clusters of the cluster comprise a largest sub-cluster, and the first score is calculated as a ratio of a number of previous input-output pairs associated with a largest sub-cluster and a number of previous input-output pairs associated with the cluster.

According to yet another embodiment, the machine learning system generates the output as a final output following a number of intermediate chain-of-thought input-output pairs. In this embodiment, determining a composite score is further based on first and second scores calculated for the intermediate chain-of-thought input-output pairs.

Also disclosed is a computer-implemented method for assessing reliability of machine learning systems. The method comprises receiving a set of predefined inputs, wherein the predefined inputs are selected to allow assessing cybersecurity aspects of machine learning systems. The method further comprises generating input-output pairs, wherein the generating input-output pairs comprises, for each input in the set of predefined inputs, providing the input to a machine learning system to generate an output and retrieving probabilities employed internally by the machine learning system for generating the corresponding output. The method also includes determining composite scores for the input-output pairs. The determining composite scores for the input-output pairs comprises determining one or more clusters associated with the input-output pairs based on a first similarity measure between respective inputs, and, for each determined cluster, determining one or more sub-clusters of the cluster based on a second similarity measure between respective outputs, calculating first scores for the input-output pairs based on the clusters and the sub-clusters, calculating second scores for the input-output pairs based on the retrieved probabilities, and determining composite scores based on the first scores and the second scores to obtain first composite scores for the input-output pairs.

The method further comprises, after a period of time has passed, repeating the generating input-output pairs and the determining composite scores to allow users to assess cybersecurity aspects of the machine learning system. Alternatively, the machine learning system is a first machine learning system, and the method further comprises repeating generating input-output pairs and determining composite scores employing a second machine learning system to allow a user to compare cybersecurity aspects of the first machine learning system and the second machine learning system.

Also disclosed is a method of training a weighting model for generating weights for assessing output of machine learning systems. The method comprises generating a set of predefined inputs for a machine learning system, and employing the machine learning system to generate input-output pairs. Generating the input-output pairs comprises providing each of the inputs to the machine learning system to generate an output and retrieving probabilities employed internally by the machine learning system for generating the output. The method further comprises determining one or more clusters associated with the set of input-output pairs based on a first similarity measure between respective inputs, and, for each determined cluster, determining one or more sub-clusters of the cluster based on a second similarity measure between respective outputs. The method also comprises calculating first scores for the set of input-output pairs based on the clusters and the sub-clusters and calculating second scores for the set of input-output pairs based on the retrieved probabilities. The method further includes receiving a user score assessing, for each input-output pair, the output with respect to the corresponding input. The method finally comprises training the weighting model to determine weights for combining the first scores and the second scores to yield composite scores based on the user scores.

According to an embodiment, generating the set of predefined inputs comprises using a natural language model configured to alter parts of an input while keeping a semantic meaning of the input.

A computing device configured to perform the above methods is also disclosed. In addition, a computer-readable medium comprising instructions that, when executed by a processing unit, cause the processing unit to perform the above methods is disclosed.

**Brief description of the Figures**

    **Figure 1** illustrates a block diagram of a system in which the invention can be implemented;

**Figure 2** illustrates clustering and sub-clustering of inputs and outputs of machine learning systems according to embodiments;

**Figure 3** illustrates assessing chain-of-thought inputs and outputs according to embodiments;

**Figure 4** illustrates a method for assessing output of a machine learning system according to embodiments;

**Figure 5** illustrates another method for assessing output of a machine learning system according to embodiments; and

**Figure 6** illustrates a method of training a weighting model for assessing output of a machine learning system according to embodiments.

**Detailed Description**

In many areas of society, use of machine learning tools has become widespread. However, deployment of machine learning tools in sensitive areas such as medical diagnosis, production of code, or maintenance of technical facilities often entails non-acceptable risk. Machine learning systems are currently provided as 'black boxes' with no possibility to understand why a certain output is produced and without checks for reliability. For example, machine learning systems for image recognition or image generation are prone to adversarial image manipulations, which entails security threats. Similarly, recent large language models provide unprecedented quality of information processing and text production, but are prone to hallucinate, i.e. fabricate facts. When hallucinating, large language models generate information that is not factually correct or relevant. There are currently no tools to assess and check output of a machine learning system for cases such as coding, technical support, or medical diagnosis. Hence, presently, the best option is to completely ban use of machine learning systems in such sensitive areas.

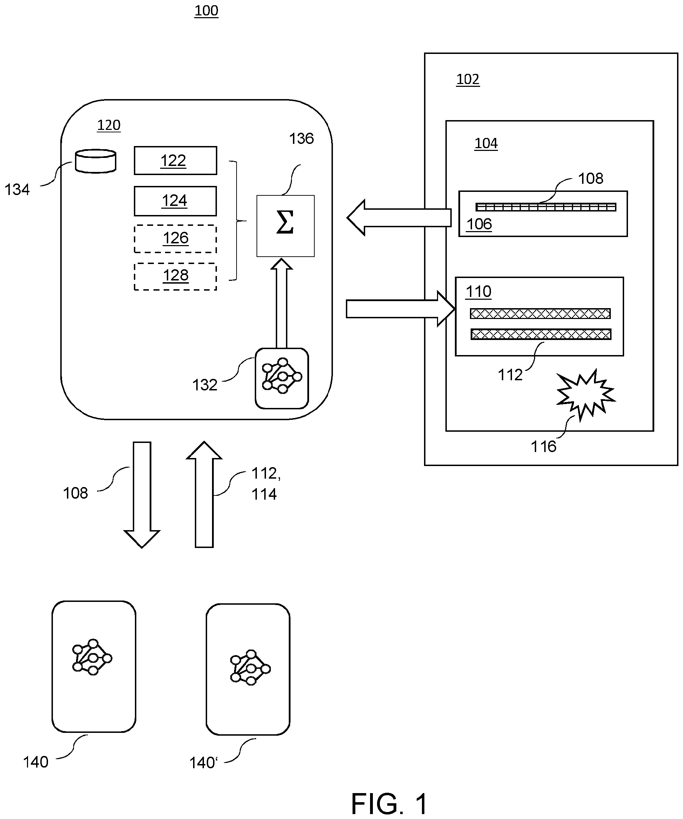

**Figure 1** illustrates a system 100 in which embodiments of the present invention may be practiced. System 100 comprises a user device 102, such as a personal computer or a smartphone. User device 102 renders a graphical user interface 104, which provides user input element 106 configured to receive user input 108. Such user input 108 may comprise questions, requests and instructions, data, images, or audio files to be provided to machine learning system 140 or, alternatively, to machine learning system 140'. Machine learning system systems 140 and 140' may implement different versions of a same machine learning system, or may be instances of different machine learning models. User device 102 is configured to send the user input 108 to scoring system 120 which forwards the user input 108 to a selected machine learning system 140, 140'. In embodiments, communication between user interface 104 and scoring system 120 is based on a first API. Scoring system 120, which will be described in further detail below, receives output 112 from machine learning system 140, 140' and provides output 112 to user device 102. Graphical user interface 104 includes output window 110 which displays output 112 generated by machine learning system 140 in response to user input 108.

Machine learning systems 140, 140' may be instances of a large language model. In other examples, user interface 104 may be a user interface of an image processing application, and machine learning systems 140, 140' may be instances of a machine learning system for image processing and/or image generation.

According to embodiments, graphical user interface 104 is a user interface of a development environment, such as an integrated development environment. In particular, a user may employ user interface 104 for developing, compiling, and testing code. In such examples, user interface 104 has a window for displaying source code and is configured for receiving user input containing statements in a programming language.

According to examples, user interface 104 may be a user interface of a word processing application, a spreadsheet application, or a web browser. In yet other examples, user interface 104 may be a user interface supporting a user in providing legal advice. In such examples, a user may employ the user interface 104 for document review and analysis, e.g. contract analysis, litigation support, compliance and risk management, or client interaction and services. In other examples, user interface 104 may provide personalized legal advice or support a user in financial research and analysis. In particular, user interface 104 may provide a virtual finance assistant. In addition, user interface 104 may provide regulatory compliance and reporting. In particular embodiments, user interface 104 may provide for a solution for fraud detection and prevention.

In other embodiments, user interface 104 may provide diagnostic assistance and treatment recommendations for clinical support. In these examples, machine learning systems 140 and 140' may be instances of a machine learning system for processing medical images, or machine learning system for processing diagnostic data such as cardiograms. In other examples, user interface 104 may provide a virtual health assistant, allow remote monitoring, support literature review, e.g. for drug discovery. In other examples, user interface 104 may support performing clinical trials or support education and training and patient data management. User interface 104 may also support a user in performing clinical trials.

In still other examples, user interface 104 may support a user with maintaining a technical system, e.g. a server farm, a telecommunications system, or an industrial system. In such examples, user inputs 108 may include a description of a technical problem encountered in the technical facility and a prompt to machine learning system 140, 140' to propose a resolution of the technical problem.

When receiving an input 108 via user prompt 106, user interface 104 is configured to send the input to scoring system 120, instead of providing input 108 directly to machine learning system 140, 140'. In embodiments, sending the user input 108 to scoring system 120 may be based on the first API. Input 108 may comprise typed text, images, or file data such as file data comprising medical data.

Scoring system 120 may be implemented on user machine 102, or, alternatively, may be implemented at a remote server accessible via the internet. Scoring system 120 receives user input 106 and forwards the input 106 to machine learning system 140. Forwarding the input 106 to machine learning system 140 may be based on a second API. When provided with input 106, machine learning system 140, 140' generates a response to input 108. Scoring system 120 includes a plurality of scoring components, such as scoring components 122-128 as illustrated. Scoring components 122-128 are configured to generate various scores for assessing output 112 generated by machine learning system 140, 140'.

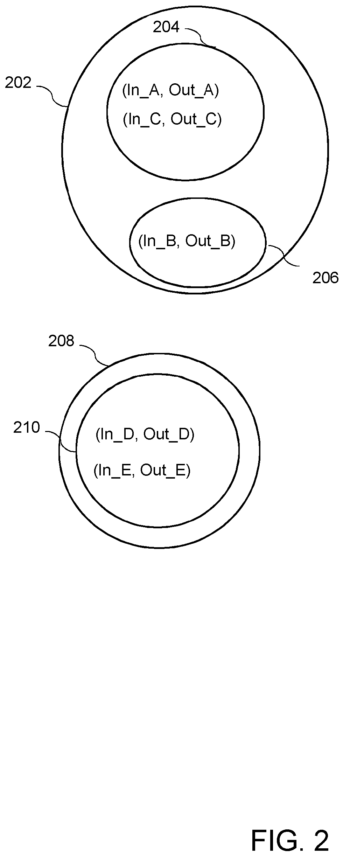

Scoring component 122 may be configured to generate a first score for an output based on a database 134 containing previous input-output pairs generated by machine learning system 140, 140'. The first score may be based on clustering together inputs and outputs based on a clustering algorithm, as described below with reference to Figure 2.

Database 134 may contain a set of previous input-output pairs specifically selected to ascertain that the machine learning system generates accurate medical diagnoses. In other examples, the previous input-output pairs may specifically be selected to include instructions to autocomplete code in different programming languages, to assess that machine learning system 140, 140' generates autocompleted code without vulnerabilities. Assessing that the autocompleted code does not contain vulnerabilities may be based on external tools that check for code vulnerabilities. The previous input-output pairs may also be generated to assess cyber security aspects of the autocompleted code generated by the machine learning system. Assessing cybersecurity aspects of the autocompleted code may be based on external tools that assess cybersecurity of code. Further, the previous input-output pairs may include instructions to generate code and the assessment may include determining that secure and accurate code is returned. Determining that the returned code is secure and accurate may be based on external tools that assess security and accurateness of code. The previous input-output pairs may also target interpreter abuse in the context of generating code for execution inside an interpreter. Accordingly, scenarios of post-exploitation, reflected attack, social engineering, container or virtual machine escape, privilege escalation, or reverse shell attacks may be reflected in the previous input-output pairs. Further, the previous input-output pairs may be selected to assess ability of the machine learning system to understand and respond to scenarios in the MITRE framework, such as collection, evasion, exfiltration, persistence, reconnaissance, command and control, discovery, execution, lateral movement, and privilege escalation. In addition, the previous input-output pairs may include inputs to assess resistance of the machine learning system to various types of prompt injection attacks, such as malicious instructions, few shot attacks, any shot attack, string manipulation, load splitting, mixed techniques, system mode, input language, ethical scenario, indirect reference, token attack, persuasion, or virtualization. Such prompt injection attacks open up the large language model to security exploits. Assessing resistance to such attacks may be based on other external tools that assess resistance of code to such attacks.

In other scenarios, the previous input-output pairs may include inputs on marketing and sales and the performance of the machine learning system in generating content and interacting with potential customers is assessed. The predefined set of inputs may also relate to human resource, financial services, or research and development. The previous input-output pairs may also include inputs on technical support for maintaining technical equipment, such as administrating a server farm or addressing performance issues in telecommunication networks.

According to embodiments, the previous input-output pairs may include inputs generated using a natural language model. The natural language model may be employed to alter parts of an input while keeping its semantic meaning. This allows to expand the number of input-output pairs and test the model for small variations in the input.

Referring now to **Figure 2,** database 134, for example, contains inputs In_A to In_E and corresponding outputs Out_A to Out_E. Figure 2 illustrates clustering and sub-clustering of input output pairs (In_A, Out_A) to (In_E, Out_E). It is to be understood that, for illustration purposes only, Figure 2 illustrates only a limited number of inputs and outputs and only two clusters. Each output Out_A to Out_E has been previously generated by machine learning system 140, 140' when fed with the corresponding input In_A to In_E. Machine learning system 140, 140' employed for generating the input-output pairs in database 134 may be a different machine learning system than the machine learning system selected for generating output 112 to input 108. For example, the input-output pairs in database 134 may have been generated by machine learning system 140', while current output 112 is generated by machine learning system 140.

As illustrated in Figure 2, a first cluster 202 is formed of (In_A, Out_A) to (In_C, Out_C) and a second cluster 208 is formed of (In_D, Out_D) and (In_E, Out_E). The clusters are formed by a clustering algorithm based on a similarity measure for the inputs of the input-output pairs. For computing the clusters, any clustering algorithm which does not require a predetermined number of clusters may be employed. For example, DBSCAN may be employed. In other embodiments, HDBSCAN, OPTICS, or Mean Shift are employed. Further, the similarity measure may be computed by different methods for assessing similarity between input data. For example, the SimHash algorithm with Hamming distance may be employed, which provides for a very efficient solution, but only captures lexical similarity for text. In other embodiments, a specifically trained neural language processing model may be employed to capture semantic relationships between the elements of the clusters. For example, a neural language processing model for entailment may be employed.

For each of the determined clusters 202, 208, sub-clusters are formed based on similarity between the outputs among the input-output pairs assigned to the cluster. As illustrated in Figure 2, input-output pairs (In_A, Out_A) and (In_C, Out_C) are clustered into a first sub-cluster 204 of cluster 202, while input-output pair (In_B, Out_B) is seen as different because Out_B significantly differs from Out_A and Out_B. Accordingly, (In_B, Out_B) is assigned to sub-cluster 206 of cluster 202 distinct from sub-cluster 204. For cluster 208, first component 122 has found that outputs Out_D and Out_E are to be clustered in a common sub-cluster 210. Computing the sub-clusters may employ the same algorithm as was used for determining the clusters. The employed similarity measure may be the same as the similarity measure employed for determining the clusters. However, in other embodiments, the similarity measure used for determining the clusters may be based on lexical similarity, while, for determining the sub-clusters, semantic similarity determined by a specifically trained neural language processing model may be employed. Such an approach is particularly advantageous if for example the same or quasi-same request has been issued multiple times to test for coherence in the responses of the machine learning system 140, 140'.

Referring now back to Figure 1, upon receiving input 108, first component 122 determines whether input 108 and output 112 can be assigned to one of the existing clusters 202, 208, and to one of the sub-clusters 204, 206, 210 of the assigned cluster. First component 122 is configured to determine a first score as the ratio of the number of outputs in the largest sub-cluster versus the total number of instances in the cluster. Accordingly, when attaching input 108/output 112 to cluster 202, output 112 receives a first score of 0.66. When assigning input 108/output 112 to cluster 208, the output 112 receives a first score of 1.0. The first score hence measures coherency of the outputs of the machine learning system. In particular, when input 108/output 112 fall into an unreliable cluster, the score will reflect it and the user will be alerted. In particular, the first score is an external metric for assessing reliability of the output 112, with respect to input 108.

Scoring tool 120 further comprises second scoring component 124 configured for determining a second score for input 108/output 112. When retrieving output 112 from machine learning system 140, 140', scoring system 120 retrieves data 114 comprising log probabilities from machine learning system 140. Retrieving output 112 from machine learning system 140, 140' may be based on the second API. For any machine learning system based on a decoder, log probabilities are employed for determining output of the machine learning system. For output Y 112 composed of tokens $y_i$, $i = 1, \ldots, N_Y$, the second score may be computed as

$$\text{score}_2 = \exp\left(\frac{-1}{N}\sum_{i=1}^{N_Y} \text{logprob}_{y_i}\right) \qquad (1)$$

where $\text{logprob}_{y_i}$ are log probabilities 114 retrieved from machine learning system 140, 140'. The second score assesses the confidence of the machine learning system 140, 140' in the generated output. The second score corresponds to a perplexity score, measuring the model's level of surprise at providing the output, given the input. The second score hence corresponds to an internal metric. The second score, in particular, is complementary to the first score, which is an external metric.

Scoring tool 120 may further comprise third scoring component 126 configured to generate a third score for the output 112. The third score may correspond to a score of mutual information, which provides a measure how much information the output 112 provides about the input 108. The third scoring component 126 is particularly relevant in examples, where the machine learning systems 140 and 140' are instances of large language models. Calculating the third score may comprise tokenizing and encoding the text of both the input 108 and the output 112 using a suitable tokenizer and embedding method. For example, BERT or another transformer-based model may be employed to convert text to vectors. Then, joint and marginal probability distributions of the tokenized encoded input and output pairs are calculated using, for example, a method like kernel density estimation or clustering-based methods to approximate the joint and marginal distributions. Based on the estimated probability distribution, mutual information may be computed as

$$I(X;Y) = H(X) - H(X|Y), \qquad (2)$$

where X refers to input 108 and Y refers to output 112, and

$$H(X) = - \sum_{x \in X} p(x) \log p(x) , \qquad (3)$$

$$H(X|Y) = - \sum_{x \in X} \sum_{y \in Y} p(x,y) \log p(x|y), \qquad (4)$$

where p(x) is the probability of X, which can be estimated using a density estimation method like KDE. Third scoring component 126 hence computes $I(X; Y)$ which forms a further complementary score for assessing reliability of output 112 in view of input 108.

According to other embodiments, machine learning systems 140 and 140' are instances of large language models configured according to retrieval-augmented generation. Such large language models include a retrieval mechanism which provides a number of sources, which may be configurable depending on the framework of the large language model. Accordingly, machine learning system 140, 140' is configured to respond to user queries with reference to external sources e.g. documents from a database, documents retrieved from the web, or sections in a technical documentation or a user manual. When given an input containing a request or instruction, machine learning system 140, 140' is then configured to select which one of the sources to use in order to generate response 112. Given a user query, a document retriever is first called to select the most relevant sources which will be used to augment the query. The generated outputs are then based both on the query and on the retrieved sources. The output provided by the machine learning system is then annotated with the used sources. In these embodiments, scoring system 120 may include fourth scoring component 128. Scoring component 128 can then be configured to determine a fourth score assessing pertinence of the employed sources. The fourth score may be determined by adapting the approach explained above for scoring component 122. However, instead of comparing request to response, the comparison is done between response and the different sources. Further, when determining the clusters and sub-clusters, cosine similarity is employed in place of a SimHash/Hamming distance. Hence, cosine similarity is used to compare sources to response 112. In embodiments, the fourth score may be further based on embeddings used by the retrieval-augmented generation to retrieve sources, which are employed similar to the logprobs of the second score.

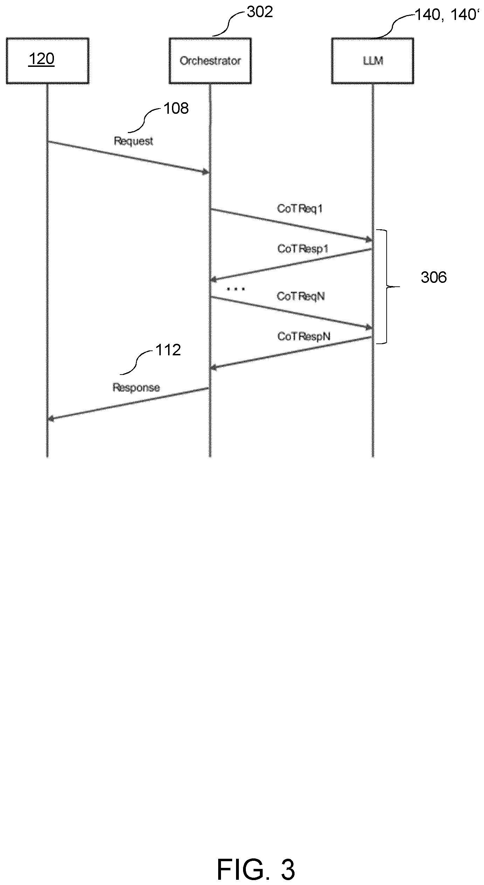

**Figure 3** relates to yet other embodiments, in which scoring system 120 employs intermediate chain-of-thought inputs. These embodiments are particularly relevant in examples, where the machine learning systems 140 and 140' are instances of large language models. As shown in Figure 3, orchestrator 302 configured to receive input, e.g. request 108 from scoring tool 120. Based on input 108, orchestrator 302 interacts with the machine learning system 140, 140' in a chain-of-thought 306. Chain-of-thought 306 includes a sequence of chain-of-thought inputs e.g. chain-of-thought requests each followed by a chain-of-thought output, e.g. chain-of-thought response. To generate the chain-of-thought inputs, orchestrator 302 may employ prompt templates, add specific context, and questions appropriate for a task. Only a final output is to be provided back to user interface 102 as output 112. Scoring system 120 may have access to the intermediate chain-of-thought inputs and outputs and calculates first, second, or third scores as explained above for each of the chain-of-thought inputs and outputs. The calculated results can be combined using weights which will typically be lower than their main input-output counterparts 108 and 112. The embodiment of Figure 3 is particularly promising for detecting hallucinations, because in such cases, chain-of-thought responses at one point will indicate that the machine learning system has lost track.

Referring now back to Figure 1, summation block 136 may be configured to combine the various scores provided by scoring components 122-128 and determine a composite score measuring reliability of output 112 in view of input 108. Summation block 136 is configured to compute the composite score by normalizing the individual scores and combining them using weights. The obtained number is also normalized and provides an indication on how reliable the output is to the input. The higher the composite score, the more reliable and coherent the output is and the less likely it is that the response is hallucinated. If output 112 falls into a new cluster because an input similar to input 108 is not contained in database has not been seen until this point, the first score cannot be computed and the composite score may only include the second or the third score and have thus a lower value than a more consolidated input-output pair.

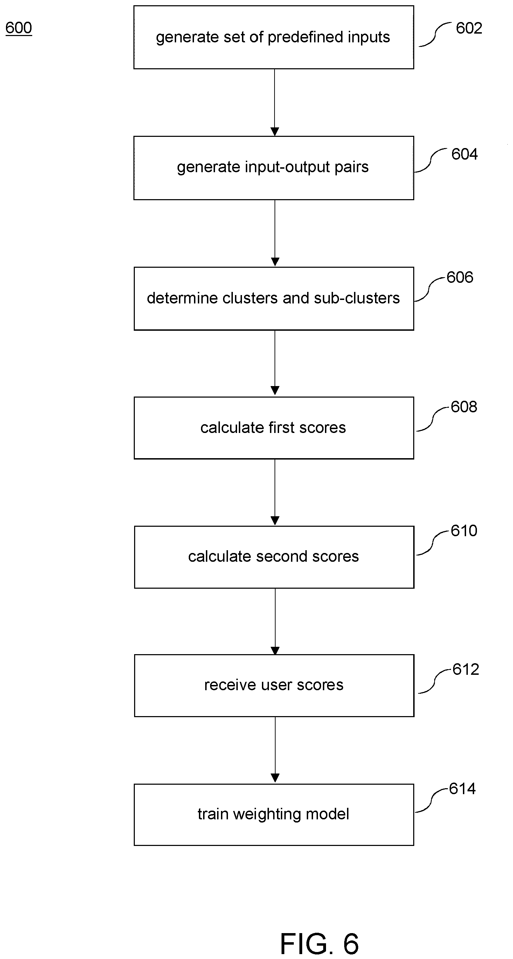

When combining the individual scores, summation block 136 may employ fixed weights. Alternatively, trained weighting model 132 may be employed to determine the weights. Training such a weighting model 132 will be explained below with reference to Figure 6. In embodiments in which weighting model 132 is trained to generate the weights, the model may also generate appropriate weights for chain-of-thought inputs and outputs.

The composite score is displayed on user interface 102. In embodiments, user interface 104 is configured to retrieve the composite score from scoring system 120 based on the first API. When the composite score is above a first threshold, the score and/or output 112 may be displayed in a particular color e.g. in green. If the composite score is below a predetermined threshold, user interface 104 alerts the user by a user interface mechanism 116, for example, by employing a particular warning color, e.g. red, by employing a warning icon, by displaying inline warnings, or by displaying a pop-up warning. Further, when the composite score is very low, user interface 104 may even refrain from displaying output 112. In other embodiments, user interface mechanism 116 may include displaying a prompt to the user to reformulate and clarify the input 108 or to provide further detail, so that the machine learning system can provide a more reliable output.

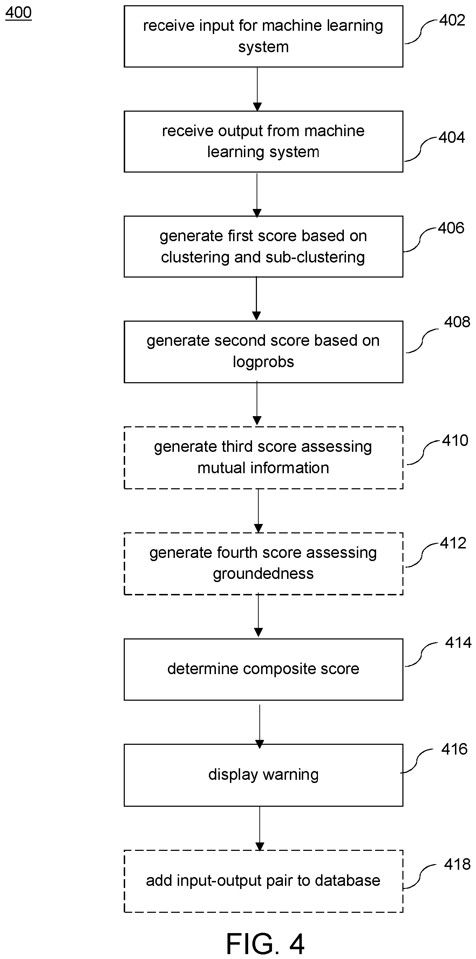

**Figure 4** illustrates an embodiment of method 400 for scoring outputs of a machine learning system. Method 400 comprises step 402 of receiving an input to be provided to a machine learning system. The input may be received via a form of a graphical user interface, as explained above, and may include a question or an instruction. The input may also be received via a first API. For example, a user computer may send the input to a scoring system via the first API.

Method 400 further comprises step 404 of providing the input to the machine learning system and receiving a corresponding output in response to the input. Providing the input to the machine learning system and receiving a corresponding output in response to the input may be based on a second API.

Method 400 further comprises step 406 of determining a first score for the input-output pair based on a set of previous input-output pairs. The set of previous input-output pairs may be accessed e.g. from database 134. As explained above with reference to Figure 2, step 406 includes clustering or grouping together inputs that share a certain similarity, and, for each cluster, sub-clustering together outputs of input-output pairs in the cluster that share similarities. In detail, step 406 includes employing a similarity measure between the current input and previous inputs of the previous input-output pairs to determine a cluster to which the current input-output pair can be associated. Accordingly, based on similarity of inputs, the current input-output pair is associated to a cluster to which one or more of the previous input-output pairs are already associated. If however, such a cluster cannot be identified because the previous input-output pair do not contain any previous input which is similar to the input, the first score cannot be calculated and user interface mechanism 116 in the graphical user interface 104 reflects this. If on the other hand, a cluster to which the input-output pair can be associated has been identified, step 406 further includes determining one or more sub-clusters of the determined cluster based on similarity between the output and previous outputs of the one or more previous input-output pairs associated with the cluster.

Step 406 of generating the first score may be followed by step 408 of generating a second score for the output. As explained above, the second output may be based on log probabilities employed by the machine learning system. The second score provides for an internal assessment of the output and is hence complementary to the first score.

Method 400 may optionally comprise step 410 of generating a third score based on mutual information, as explained in further detail above. The third score provides yet another complementary measure for reliability of the output.

In embodiments, method 400 may be applied to a machine learning system implementing a large language model which is based on retrieval-augmented generation setup. In these embodiments, method 400 can comprise step 412 of generating a fourth score which assesses that sources provided by the machine learning system are pertinent. The fourth score hence assess groundedness of the output in the sources.

Step 414 of determining a composite score may be based on the first and the second score, and may optionally also be based on the third score and/or fourth score. In embodiments, determining the composite score may further be based on scores for individual outputs and inputs in a chain-of- thought interaction with the machine learning system generated by an orchestrator.

Method 400 may comprise displaying the output provided by the machine learning system. When the composite score is below a threshold, method 400 comprises step 416 of displaying a warning on the user interface that the output is unreliable. Displaying a warning may take various forms such as displaying the output with an adjusted color, displaying a warning icon, or displaying the output along with an inline warning message. In embodiments, when the composite score is below a threshold, the output 112 may not be displayed at all or may be displayed while deactivating copy and paste.

Method 400 may further comprise storing 418 the input-output pair, so that it forms part of the previous input-output pairs for future input. For example, the input-output pair may be stored to database 134 illustrated in Fig. 1. Accordingly, database 134 will over time contain a variety of domain-specific input-output pairs to improve human interaction with the machine learning system.

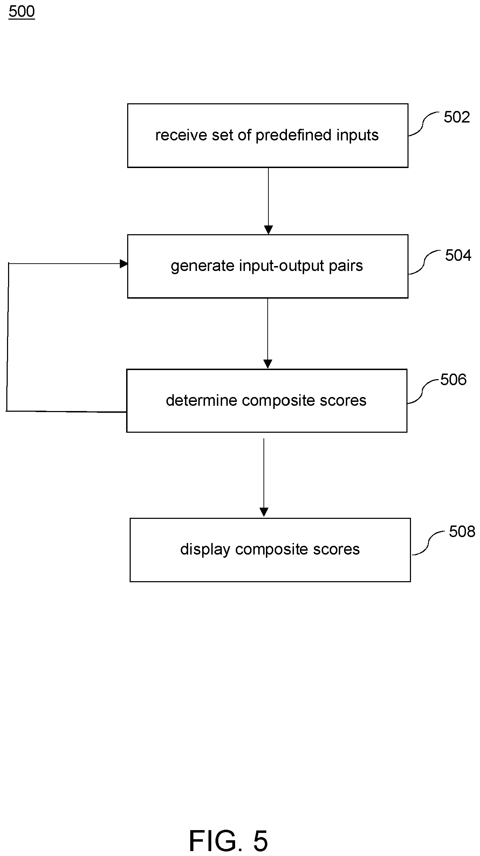

Method 400 corresponds to an online mode in which user interaction with the machine learning system is intercepted, assessed, and stored. Method 400 can be performed after an initial training phase of the system, as explained below with reference to Figure 5.

**Figure 5** illustrates another method 500 for assessing output of machine learning systems. The method comprises step 502 of receiving a set of predefined inputs. The predefined inputs are selected to allow assessing cybersecurity aspects of a machine learning system.

In step 504, a machine learning system, such as machine learning system 140 or machine learning system 140' is employed to generate input-output pairs, wherein the generating input-output pairs comprises, for each input in the set of predefined inputs, providing the input to the machine learning system 140, 140' to generate an output 112 and retrieving probabilities 114 employed internally by the machine learning system 140, 140' for generating the output 112.

Method 500 further comprises determining 506 composite scores for the input-output pairs determined at step 504. The composite scores are based on first and second scores, and optionally, third and/or fourth scores, as explained above.

Steps 504 and 506 may be repeated after a period of time has passed. By again providing the predefined inputs to the machine learning system, second input-output pairs are generated and steps 504-512 are repeated for the second input-output pairs to obtain second composite scores for the same set of predefined inputs. A user can then compare the first and second composite scores and assess whether performance of the machine learning model has changed, e.g. due to updates, version changes, or new bugs in the machine learning model. Hence, method 500 provides for an automated testing sequence to be performed on the machine learning system to test coherence of its outputs. This can be performed periodically as an auditing mechanism for the performance of the machine learning system. These embodiments are particularly relevant to assess performance of machine learning systems after version changes. Specifically, the predefined inputs are selected to allow assessing cybersecurity aspects of machine learning systems, so that the obtained composite scores may be assessed to detect whether a new version of a machine learning system poses a security risk.

In another alternative, the machine learning system is a first machine learning system. A second machine learning system, such as a machine learning system based on a different architecture, is employed to generate second input-output pairs in repeated step 504. Step 506 is then repeated for the second input-output pairs to yield second composite scores. According to this alternative, method 500 can be employed to directly compare performance of different machine learning systems on the same input data. Specifically, this alternative allows assessing performance of different machine learning systems on cybersecurity aspects. This alternative hence allows insight into the internal functioning of machine learning systems

**Figure** 6 illustrates method 600 for training a weighting model for generating weights for scoring output of a machine learning system.

Method 600 comprises step 602 of receiving a set of predefined inputs for a machine learning system. Method 600 further comprises step 604 of employing a machine learning system to generate input-output pairs. This step may include, for each input in the set of predefined inputs, providing the input to the machine learning system to generate an output and retrieving probabilities employed internally by the machine learning system for generating the output, wherein the input and the output forms an input-output pair.

Method 600 also comprises determining 606 one or more clusters associated with the set of input-output pairs based on a first similarity measure between respective inputs, and, for each determined cluster, determining one or more sub-clusters of the cluster based on a second similarity measure between respective outputs.

Method 600 further includes calculating 608 first scores for the set of input-output pairs based on the clusters 202, 208 and the sub-clusters. For each cluster, the first score may be computed as the ratio of the number of responses in the largest sub-cluster versus the total number of instances in the cluster.

Method 600 also comprises calculating 610 second scores for the set of input-output pairs based on the retrieved probabilities.

Method 600 further includes step 612 of receiving, for each input-output pair, a user score assessing the output with respect to the corresponding input. The user score may be created by human domain experts who label each tuple of input and output with a score. Alternatively, proxy values are provided if directly providing the score is too unreliable for the domain. For such examples, the user may only provide positive, negative, and don't know labels.

Method 600 finally comprises step 614 of training a weighting model to obtain the weights for combining the scores produced by the scoring system. Training the weighting model comprises adapting weights of an artificial neural network to minimize a loss between predicted composite scores and the user scores. The trained weighting model may then form weighting model 132 in the embodiment of Figure 1.

The disclosed methods can be implemented on a computing device. The computing device comprises a processor and storage containing instructions for the above described method steps. When executing the instructions, the computing device performs the above methods 400, 500, and/or 600. The disclosed methods can be implemented on a computer-readable medium containing instructions, which, when read by a computing device, configure the computing device to perform the above methods 400, 500, and/or 600.

The proposed methods and systems hence address security aspects that arise from use of machine learning tools. This disclosure provides both internal and external scores for assessing quality of output of machine learning systems. These scores provide for a guided human-machine interaction with machine learning systems and allow automatically detecting security hazards.

**Claims**

**1.** A computer-implemented method (300) for assessing output of machine learning systems, the method comprising:

    receiving (402), via a user interface (104), an input (108) to be provided to a machine learning system (140, 140');
    receiving (404), from the machine learning system (140, 140'), an output (112) in response to the input (108), wherein the input (108) and the output (112) form an input-output pair;
determining (406) a first score for the input-output pair based on a set of previous input-output pairs, wherein the determining (304) a first score comprises:

grouping the input-output pair and one or more previous input-output pairs of the set of previous input-output pairs into a cluster (202, 208) based on a first similarity measure between the input (108) and previous inputs of the previous input-output pairs; and
determining one or more sub-clusters of the cluster (202, 208) based on a second similarity measure between the output (112) and previous outputs of the one or more previous input-output pairs grouped into the cluster;

determining (408) a second score for the input-output (112), wherein the second score is based on probabilities (114) employed internally by the machine learning system (140, 140') for generating the output (112); and
determining (414) a composite score for the output (112) based on the first score and the second score; and
when the composite score is below a threshold, displaying (416), at the user interface (104), a warning (116) that the output (112) is unreliable.

2.   The method of claim 1, wherein the user interface (104) is a user interface of a development environment, wherein the input (108) comprises an instruction to generate code.

3.   The method of one of the preceding claims, wherein the user interface (104) is a user interface for supporting a user with controlling a technical system, a user interface for diagnostic assistance and medical treatment recommendation, a user interface for legal document analysis and drafting, a user interface for financial research and analysis, or a user interface for regulatory monitoring and fraud detection.

4.   The method of any one of the preceding claims, at least one of:

wherein inputs in the set of previous input-output pairs comprise instructions to autocomplete code in different programming languages to assess that the machine learning system (140, 140') generates autocompleted code without vulnerabilities,
wherein inputs in the set of previous input-output pairs comprise instructions to generate code to assess that the machine learning system (140, 140') generates secure and accurate code;
wherein inputs in the set of previous input-output pairs comprise instructions to generate code for execution inside an interpreter to assess resistance of the machine learning system (140, 140') to attacks involving interpreter abuse; and
wherein inputs in the set of previous input-output pairs are selected to assess resistance of the machine learning system (140, 140') to prompt injection attacks.

5.   The method of any one of the preceding claims,

wherein each input-output pair of the set of previous input-output pairs contains a previous input and a corresponding previous output generated by the machine learning system (140) in response to the previous input, or
wherein the machine learning system is a first machine learning system (140), and wherein each input-output pair of the set of previous input-output pairs contains a previous input and a corresponding previous output generated by a second machine learning system (140') in response to the previous input.

6.   The method of any one of the preceding claims,

further comprising generating (308) a third score for the output (112) based on calculating mutual information between the input (108) and the output (112), and wherein the determining (410) a composite score is further based on the third score and/or
further comprising determining a fourth score based on comparing the output (112) to sources retrieved by the machine learning system (140, 140') for generating the output (112), and wherein the determining (310) a composite score is further based on the fourth score.

7.   The method of any one of one of the preceding claims, wherein the determining (310) a composite score based on the first score and the second score comprises combining the first score and the second score using weights, wherein the weights are generated by a trained weighting model (132).

8. The method of any one of one of the preceding claims,
wherein the first similarity measure is based on a Hamming distance, and the second similarity measure is determined by a trained natural language model configured for assessing entailment.

9. The method of any one of the preceding claims,
wherein the one or more sub-clusters (204, 206, 210) of the cluster (202, 208) comprise a largest sub-cluster, and wherein the first score is calculated as a ratio of a number of previous input-output pairs associated with the largest sub-cluster and a number of previous input-output pairs associated with the cluster (202, 208).

10. The method of any one of one of the preceding claims, wherein the machine learning system (140, 140') generates the output (112) as a final output (508) following a number of intermediate chain of thought input-output pairs (506), and wherein the determining (310) a composite score is further based on first and second scores calculated for the intermediate chain of thought input-output pairs (506).

11. A computer-implemented method (500) for assessing output of machine learning systems, the method comprising:

receiving (502) a set of predefined inputs, wherein the predefined inputs are selected to allow assessing cybersecurity aspects of a machine learning system;
generating (504) input-output pairs, wherein the generating input-output pairs comprises, for each input in the set of predefined inputs, providing the input to a machine learning system (140, 140') to generate an output (112) and retrieving probabilities (114) employed internally by the machine learning system (140, 140') for generating the output (112);
determining (506) composite scores for the input-output pairs, wherein the determining composite scores for the input-output pairs comprises:

determining one or more clusters (202, 208) associated with the input-output pairs based on a first similarity measure between respective inputs, and, for each determined cluster, determining one or more sub-clusters (204, 206, 210) of the cluster based on a second similarity measure between respective outputs;
calculating first scores for the input-output pairs based on the clusters (202, 208) and the sub-clusters (204, 206, 210);
calculating second scores for the input-output pairs based on the retrieved probabilities (114); and
determining composite scores based on the first scores and the second scores to obtain first composite scores for the input-output pairs,

wherein the method further comprises, after a period of time has passed, repeating the generating input-output pairs and the determining composite scores to allow users to assess cybersecurity aspects of the machine learning system (140, 140') overtime, or
wherein the machine learning system is a first machine learning system, and wherein the method further comprises repeating the generating input-output pairs and the determining composite scores employing a second machine learning system to allow a user to compare cybersecurity aspects of the first machine learning system and the second machine learning system.

12. A computer-implemented method (600) of training a weighting model (132) for generating weights for assessing output of machine learning systems, the method comprising:

generating (602) a set of predefined inputs for a machine learning system (140, 140');
employing the machine learning system (140, 140') to generate (604) input-output pairs, wherein the generating input-output pairs comprises, for each input in the set of predefined inputs, providing the input to the machine learning system (140, 140') to generate an output (112) and retrieving probabilities (114) employed internally by the machine learning system (140, 140') for generating the output (112);
determining (606) one or more clusters (202, 208) associated with the set of input-output pairs based on a first similarity measure between respective inputs, and, for each determined cluster, determining one or more sub-clusters (204, 206, 210) of the cluster based on a second similarity measure between respective outputs;
calculating (608) first scores for the set of input-output pairs based on the clusters (202, 208) and the sub-clusters (204, 206, 210);
calculating (610) second scores for the set of input-output pairs based on the retrieved probabilities (114);

for each input-output pair, receiving (612) a user score assessing the output with respect to the corresponding input; and
based on the user scores, training (614) the weighting model (132) to determine weights for combining the first scores and the second scores to yield composite scores.

13. The method of any one of the preceding claims, wherein the generating a set of predefined inputs comprises using a natural language model to alter parts of an input while keeping a semantic meaning of the input.

14. A computing device configured to perform the method of any one of claims 1 to 13.

15. A computer-readable medium (713) comprising instructions that, when executed by a processing unit (712), cause the processing unit (712) to perform the method of any one of claims 1 to 13.

FIG. 1

204

(In_A, Out_A)

(In_C, Out_C)

202

(In_B, Out_B)

206

208

210

(In_D, Out_D)

(In_E, Out_E)

FIG. 2

FIG. 3

400

receive input for machine learning system — 402

receive output from machine learning system — 404

generate first score based on clustering and sub-clustering — 406

generate second score based on logprobs — 408

generate third score assessing mutual information — 410

generate fourth score assessing groundedness — 412

determine composite score — 414

display warning — 416

add input-output pair to database — 418

FIG. 4

500

```
receive set of predefined inputs          502

generate input-output pairs               504

determine composite scores                506

display composite scores                  508
```

# FIG. 5

<u>600</u>

```
┌─────────────────────────────────┐
│  generate set of predefined inputs  │ ⟋ 602
└─────────────────────────────────┘
                │
                ▼
┌─────────────────────────────────┐
│    generate input-output pairs     │ ⟋ 604
└─────────────────────────────────┘
                │
                ▼
┌─────────────────────────────────┐
│  determine clusters and sub-clusters │ ⟋ 606
└─────────────────────────────────┘
                │
                ▼
┌─────────────────────────────────┐
│       calculate first scores       │ ⟋ 608
└─────────────────────────────────┘
                │
                ▼
┌─────────────────────────────────┐
│      calculate second scores       │ ⟋ 610
└─────────────────────────────────┘
                │
                ▼
┌─────────────────────────────────┐
│        receive user scores         │ ⟋ 612
└─────────────────────────────────┘
                │
                ▼
┌─────────────────────────────────┐
│       train weighting model        │ ⟋ 614
└─────────────────────────────────┘
```

# FIG. 6

## EUROPEAN SEARCH REPORT

Europäisches Patentamt
European Patent Office
Office européen des brevets

**Application Number**

EP 24 38 3315

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JINLONG PANG ET AL: "Improving Data Efficiency via Curating LLM-Driven Rating Systems", ARXIV.ORG, CORNELL UNIVERSITY LIBRARY, 201 OLIN LIBRARY CORNELL UNIVERSITY ITHACA, NY 14853, 9 October 2024 (2024-10-09), XP091909996, * Definition 3.2; figure 3; table 1 * * page 2, paragraph 2 - page 5, paragraph 2 * * page 15, paragraph 1 * ----- | 1-15 | INV. G06N3/045 G06N3/088 G06N3/091 ADD. G06F21/57 |
| A | US 2020/274894 A1 (ARGOETI ITAY [IL] ET AL) 27 August 2020 (2020-08-27) ----- | 11 | |

**TECHNICAL FIELDS SEARCHED (IPC)**

G06N
G06F

The present search report has been drawn up for all claims

| Place of search | Date of completion of the search | Examiner |
|---|---|---|
| The Hague | 9 April 2025 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 3315

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2025

| Patent document cited in search report | Publication date | Patent family member(s) | Publication date |
|---|---|---|---|
| US 2020274894 A1 | 27-08-2020 | US 2020274894 A1 | 27-08-2020 |
| | | WO 2020180407 A2 | 10-09-2020 |

EPO FORM P0459

For more details about this annex : see Official Journal of the European Patent Office, No. 12/82